Europäisches Patentamt

European Patent Office

Office européen des brevets

(11) Veröffentlichungsnummer: **0 059 331**
**A1**

(12) # EUROPÄISCHE PATENTANMELDUNG

(21) Anmeldenummer: **82100800.0**

(22) Anmeldetag: **10.02.82**

(51) Int. Cl.³: **H 04 M 1/08**

(30) Priorität: **27.02.81 DE 3107375**

(43) Veröffentlichungstag der Anmeldung:
**08.09.82 Patentblatt 82/36**

(84) Benannte Vertragsstaaten:
**AT CH GB IT LI NL SE**

(71) Anmelder: **KRONE GmbH**
**Goerzallee 311**
**D-1000 Berlin 37(DE)**

(72) Erfinder: **Diehr, Helmut**
**Stellmacher-Weg 34**
**D-1000 Berlin 37(DE)**

(74) Vertreter: **Patentanwälte Beetz sen. - Beetz jr. Timpe -**
**Siegfried - Schmitt-Fumian**
**Steinsdorfstrasse 10**
**D-8000 München 22(DE)**

(54) Gabelumschalter für fernmeldetechnische Geräte, insbesondere für Fernsprechapparate.

(57) Gegenstand der Erfindung ist ein Gabelumschalter für fernmeldetechnische Geräte, insbesondere für Fernsprechapparate, dessen Kontakte die elektrischen Verbindungen zu den weiterführenden Fernmeldeeinrichtungen schalten. Das Gehäuse des Gabelumschalters ist zur Vereinfachung der Kontaktelemente und unterschiedlichen Schaltfolgen aus einer Bodenplatte (1), in der eine oder mehrere Kontakteinheiten gesteckt sind, und aus einer auswechselbaren Schaltkappe (2) aufgebaut, die zur Steuerung der Schaltfunktionen und Schaltfolgen Schaltstege (2a) aufweist und über eine Schaltwippe (3) aufgrund der beiden Betriebszustände ("A", "B"), d. h. abgehobener oder aufgelegter Handapparat, zwei Positionen einnimmt, wobei jede der Kontakteinheiten aus zwei gleichen Festkontakten (4) und einer gleich ausgebildeten und mechanisch vorgespannten Schaltfeder (5) besteht.

Fig.1

Gabelumschalter für fernmeldetechnische
Geräte, insbesondere für Fernsprechapparate

Die Erfindung betrifft einen Gabelumschalter für
fernmeldetechnische Geräte, insbesondere für Fernsprechapparate, dessen Kontakte die elektrischen Verbindungen zu den weiterführenden Fernmeldeeinrichtungen schalten, und bezweckt, eine einfache und preiswerte Einrichtung dieser Art wegen ihres großen Bedarfes zu
schaffen.

Gabelumschalter lösen innerhalb der unterschiedlichen Wählsysteme die notwendigen Schaltaufgaben zwischen dem Fernsprechapparat und den Vermittlungseinrichtungen, indem das Abheben oder Auflegen des Handapparates indirekt zu Kontaktbetätigungen genutzt wird.

Nach dem Stand der Technik enthalten Gabelumschalter bis zu vier Kontakteinheiten, die als Ein-, Aus-, Um- und Folgeschalter wirken, wobei Anzahl, Art und Schaltfolgen zueinander vom jeweiligen Wählsystem bestimmt werden.

Derartige bekannte Gabelumschalter, wie die Gabelumschalter nach der DE-PS 11 34 111, der DE-PS 21 19 909 und de- DE-AS 20 56 548, benötigen sämtlich für jeden Schaltstützpunkt eine Kontaktfeder. Die Kontaktfedern sind innerhalb der Gabelumschalter in Form und Abmessungen unterschiedlich. Ihre Vielzahl und damit auch der Bedarf an Niet- bzw. Schweißkontakten sowie die Justierung der Schaltfolgen zwischen den Kontakteinheiten ergeben hohe Kosten. Weitere Nachteile sind die Störanfälligkeit dieser Systeme und daß die Kontaktkräfte erst in den Anschlagstellungen der Schalterwippen ihre Höchstwerte erreichen.

Das Auswechseln einer defekten Kontaktfeder macht eine Neujustierung des Gabelumschalters erforderlich.

Der Gabelumschalter nach der DE-PS 23 02 322 enthält mehrere Reihen Kontaktstifte. Jeder Reihe ist eine Kontaktfeder zugeordnet, die in kurzschließender Funktion zu den Kontaktstiften steht. Bei Bewegung einer Schaltwippe, mit der die Kontaktfedern verbunden sind, werden die vorgeschriebenen Schaltfolgen erzielt. Nachteilig wirkt sich hierbei die Schaltarbeit dieses Gabelumschalters aus, wodurch sehr hoher Kontaktverschleiß entsteht, so daß sein Einsatz im Fernsprechbereich aus Kostengründen in Frage gestellt ist.

Zweck der Erfindung ist es, in hohem Maße zur Abstellung dieser Mängel beizutragen. Der Erfindung liegt daher die Aufgabe zugrunde, einen Gabelumschalter zu schaffen, der mit wenigen, immer gleichen Kontaktelementen ohne Justierung jede gewünschte Schaltfolge realisiert und dessen Kontakt- bzw. Aufschaltkräfte stets konstant sind. Weiter wird gefordert, daß das Auswechseln eines Kontaktelementes keiner Justierarbeit bedarf, und daß der Gabelumschalter in allen Fernsprech-Apparate-Gehäusen untergebracht werden kann sowie die Erweiterung seiner Schaltaufgaben für zukünftige Wählsysteme möglich ist. Der Gabelumschalter muß bei hoher Betriebssicherheit kostengünstig zu fertigen sein.

Diese Aufgabe wird erfindungsgemäß dadurch gelöst, daß das Gehäuse des Gabelumschalters aus einer Bodenplatte, in der eine oder mehrere Kontakteinheiten gesteckt sind, deren jede aus zwei gleichen Festkontakten und einer gleich ausgebildeten und mechanisch vorgespannten Schaltfeder besteht, und einer auswechselbaren Schaltkappe aufgebaut ist, die zur Steuerung der Schaltfunktionen und Schaltfolgen Schaltstege aufweist und über eine Schaltwippe aufgrund der beiden Betriebszustände, d. h. abgehobener oder aufgelegter Handapparat, zwei Positionen einnimmt.

Vorteilhafte weitere Ausgestaltungen der einzelnen Merkmale der Erfindung sind in den Unteransprüchen gekennzeichnet.

Die Erfindung soll anhand des in den Zeichnungen dargestellten Ausführungsbeispieles näher erläutert werden. Es zeigen:

Fig. 1     die Draufsicht auf vier Kontakteinheiten im Betriebszustand "B" mit
einer im Schnitt dargestellten Schaltkappe,

Fig. 2     die Seitenansicht des Gabelumschalters
in seinen beiden Betriebszuständen "A"
und "B",

Fig. 3     die Vorderansicht einer Kontakteinheit
nach der Erfindung mit ihren Lötanschlüssen in vergrößerter Schnittdarstellung.

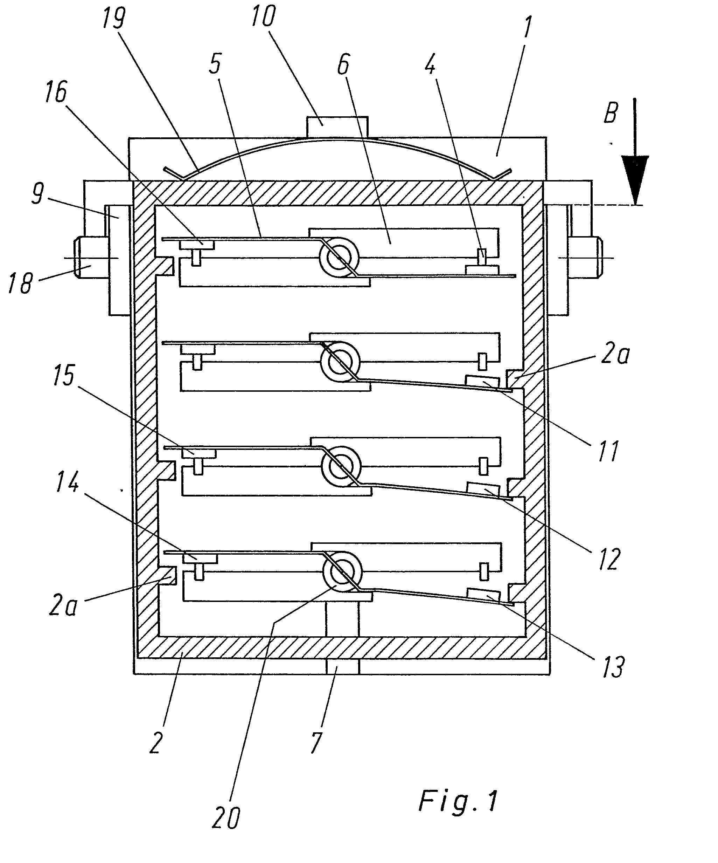

Die Fig. 1 zeigt, daß vier Kontakteinheiten in einer Bodenplatte 1 angeordnet sind. Jede Kontakteinheit besteht aus zwei Festkontakten 4 sowie einer Schaltfeder 5.

Die Schaltfedern 5 sind derart mechanisch vorgespannt, daß die beiden Enden mit ihren Kontakten 11 ... 16 auf den Festkontakten 4 eine geschlossene Schaltverbindung darstellen, wobei die Aufschaltkräfte zwischen den Kontakten stets gleiche Größe haben.

Durch wechselseitiges Abheben oder Absenken der Schaltfederenden mit ihren Kontakten 11 ... 16 gegenüber den Festkontakten 4 kann jede Kontakteinheit in vorteilhafter Weise beliebig als Schließer-, Öffner-, Um- oder Folge-Gabelumschalter-Schaltstufe genutzt werden.

Untereinander werden die Kontakteinheiten, wie die Fig. 1 weiterhin zeigt, durch Schaltstege 2a gesteuert, die im Innern der auswechselbaren Schaltkappe 2 angeformt sind.

Die Anordnung der Schaltstege 2a der fallweise verwendeten Schaltkappe 2 steuert die Schaltfunktionen und Schaltfolgen der Kontakteinheiten. Durch unterschiedliche oder Umgestaltung der Schaltstege 2a der Schaltkappe 2 ist eine beliebige Veränderung der Schaltfunktionen und Schaltfolgen realisierbar.

Die Schaltkappe 2 ist in der Anschlagstellung des Betriebszustandes "B", d. h. abgehobener Handapparat, dargestellt.

Die Schaltfedern 5 sowie die Festkontakte 4 sind in Aufnahmen 6 lagegesichert.

Erfindungsgemäß ist der Gabelumschalter infolge der fixierten Lage der Kontakteinheiten und der Schaltsteglage justierfrei. Sämtliche Festkontakte 4 und Schaltfedern 5 sind gleich ausgebildet.

Das Auswechseln eines Kontaktelementes bedarf keiner Justierarbeit; aufgrund der gleichen Teile wird das Auswechseln sowie die Herstellung der Bauteile vereinfacht und daher besonders kostengünstig.

Wie das in Fig. 1 dargestellte Beispiel weiter zeigt, sind bei abgehobenem Handapparat die Kontakte 11, 12, 13 geöffnet. Beim Auflegen des Handapparates werden die Kontakte 11, 12, 13 auf die zugehörigen Festkontakte 4 geschaltet, wogegen die Schaltverbindung der Kontakte 14, 15, 16 von den Festkontakten 4 getrennt wird.

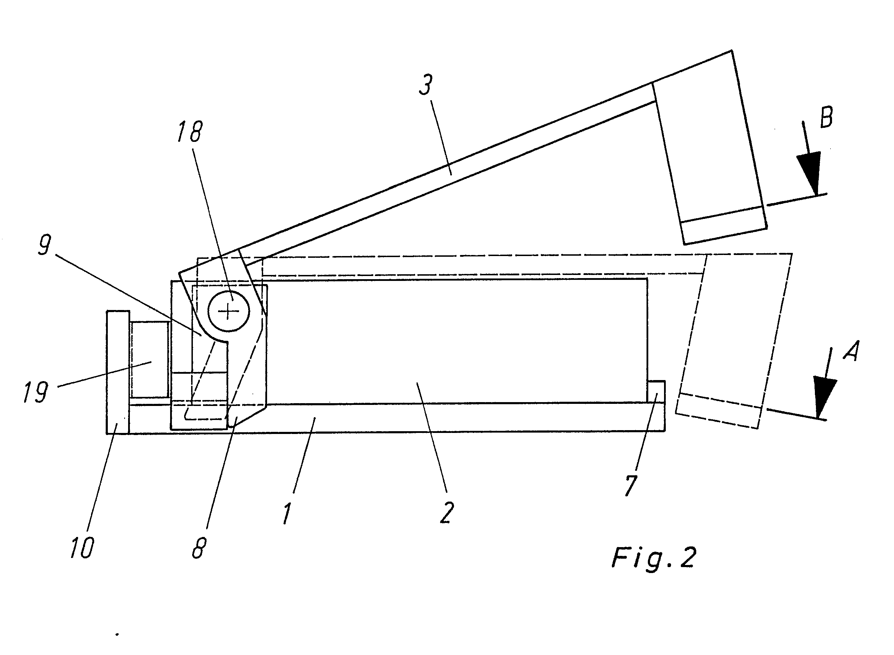

Die Fig. 2 zeigt, daß die Schaltwippe 3 mit Lagern 18 schwenkbar verbunden ist und im Betriebszustand "B" über den Hebel 8 ebenso wie die Schaltkappe 2 an dem Anschlag 9 anliegt. Diese Position bewirkt eine Blattfeder 19, die sich zwischen einer Federanlage 10 und der Schaltkappe 2 abstützt, wobei die Kraft der Blattfeder 19 größer als die Summe der Kräfte der Schaltfedern 5 ist.

Weiter zeigt Fig. 2, daß bei einer Betätigung der Schaltwippe 3 von dem einen Betriebszustand "B" in den anderen Betriebszustand "A" die in einer Führung 7 gelagerte Schaltkappe 2 über den Hebel 8 verschoben wird.

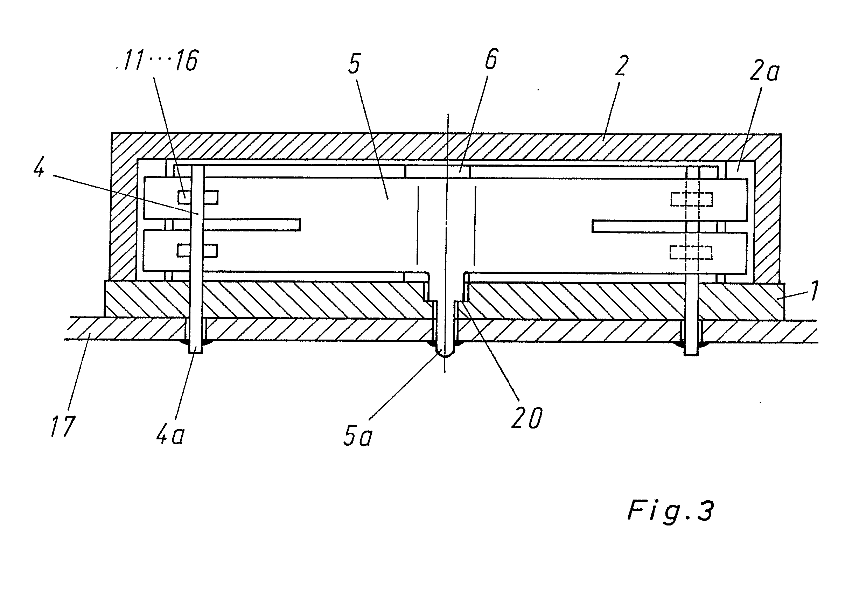

Die Fig. 3 zeigt den Gabelumschalter mit seinen elektrischen Anschlüssen in einer Leiterplatte 17. Die Festkontakte 4 haben einen rechteckigen Drahtquerschnitt und ragen mit ihren Lötanschlüssen 4a - ebenso wie der Lötanschluß 5a der Schaltfeder 5 - in den Lötbereich der Leiterplatte 17 hinein.

Eine Sackbohrung 20 dient für den Ansatz des Lötanschlusses 5a als Anschlag und verhindert damit die Berührung zwischen der Schaltfeder 5 und dem Oberflächenbereich der Bodenplatte 1.

Ferner zeigt die Fig. 3, daß die Schaltfedern 5 an ihren Enden jeweils mit den Kontakten 11 ... 16 als Doppelkontakte bestückt sind.

0059331

Bezugszeichenliste
-------------------

| | |
|---|---|
| 1 | Bodenplatte |
| 2 | Schaltkappe |
| 2a | Schaltstege |
| 3 | Schaltwippe |
| 4 | Festkontakt |
| 4a | Lötanschluß |
| 5 | Schaltfeder |
| 5a | Lötanschluß |
| 6 | Aufnahme |
| 7 | Führung |
| 8 | Hebel |
| 9 | Anschlag |
| 10 | Federanlage |
| 11-16 | Kontakt |
| 17 | Leiterplatte |
| 18 | Lager |
| 19 | Blattfeder |
| 20 | Sackbohrung |
| A | Betriebszustand aufgelegter Handapparat |
| B | " abgehobener Handapparat |

Ansprüche
---------

1. Gabelumschalter für fernmeldetechnische Geräte, insbesondere für Fernsprechapparate, dessen Kontakte die elektrischen Verbindungen zu den weiterführenden Fernmeldeeinrichtungen schalten,

d a d u r c h   g e k e n n z e i c h n e t ,

daß das Gehäuse des Gabelumschalters aus einer Bodenplatte (1), in der eine oder mehrere Kontakteinheiten gesteckt sind, deren jede aus zwei gleichen Festkontakten (4) und einer gleich ausgebildeten und mechanisch vorgespannten Schaltfeder (5) besteht, und einer auswechselbaren Schaltkappe (2) aufgebaut ist, die zur Steuerung der Schaltfunktionen und Schaltfolgen Schaltstege (2a) aufweist und über eine Schaltwippe (3) aufgrund der beiden Betriebszustände ("A", "B"), d. h. abgehobener oder aufgelegter Handapparat, zwei Positionen einnimmt.

2. Gabelumschalter nach Anspruch 1,
dadurch gekennzeichnet,
daß durch Verschieben, Weglassen oder Hinzufügen von Schaltstegen (2a) oder durch Auswechseln der Schaltkappe (2) jede gewünschte Schaltfolge realisierbar ist.

125-(x 2170-81-1)-TE

3. Gabelumschalter nach Anspruch 1,
   dadurch gekennzeichnet,
   daß zur Befestigung der Festkontakte (4) sowie der
   Schaltfeder (5) Aufnahmen (6) auf der Bodenplatte
   (1) starr angeordnet sind.

4. Gabelumschalter nach Anspruch 1,
   dadurch gekennzeichnet,
   daß jeder Festkontakt (4) als Draht mit rechteckigem
   Querschnitt ausgebildet ist, durch die Bodenplatte
   (1) hindurchreicht und einen Lötanschluß (4a) bildet.

5. Gabelumschalter nach Anspruch 1,
   dadurch gekennzeichnet,
   daß die Schaltfeder (5) im mittleren Bereich einen
   Lötanschluß (5a) aufweist, der durch die Bodenplatte
   (1) hinausragt.

6. Gabelumschalter nach Anspruch 1,
   dadurch gekennzeichnet,
   daß in der Bodenplatte (1) für die Schaltkappe (2)
   eine Führung (7) angeordnet ist.

0059331

1/3

Fig. 1

Fig.2

Fig.3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-B-2 501 587 (DEUTSCHE TELEPHONWERKE) <br> * Spalte 2, Zeile 21 - Spalte 4, Zeile 26; Figuren * | 1-3,6 | H 04 M 1/08 |
| A | DE-A-2 119 908 .(SIEMENS) <br> * Seite 7, Zeile 12 - Seite 12, Zeile 30; Figuren * | 1-3,6 | |
| A | US-A-3 422 231 (PARK) <br> * Spalte 2, Zeile 3 - Spalte 3, Zeile 56; Figuren * | 1-4,6 | |

|  |
|---|
| RECHERCHIERTE SACHGEBIETE (Int. Cl. 3) |
| H 04 M 1/08 <br> H 01 H 15/04 <br> H 01 H 13/52 <br> H 01 H 13/10 |

Der vorliegende Recherchenbericht wurde für alle Patentansprüche erstellt.

| Recherchenort | Abschlußdatum der Recherche | Prüfer |
|---|---|---|
| DEN HAAG | 01-06-1982 | KEPPENS P.M.R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82